**Europäisches Patentamt**

**European Patent Office**

**Office européen des brevets**

(11) Veröffentlichungsnummer: **0 035 095**
**A1**

# EUROPÄISCHE PATENTANMELDUNG

(21) Anmeldenummer: **81100148.6**

(51) Int. Cl.³: **F 16 B 13/08**

(22) Anmeldetag: **10.01.81**

(30) Priorität: **29.02.80 DE 3007650**

(43) Veröffentlichungstag der Anmeldung: **09.09.81**
**Patentblatt 81/36**

(84) Benannte Vertragsstaaten: **AT BE CH FR GB IT LI NL**

(71) Anmelder: **artur fischer forschung, Weinhalde 14 - 18, D-7244 Waldachtal 3 (Tumlingen) (DE)**

(72) Erfinder: **Fischer, Arthur, Dr. h. c., Weinhalde 34, D-7244 Waldachtal 3/Tumlingen (DE)**

(54) **Spreizdübel für die Verankerung in konisch nach innen erweiterten Bohrlöchern.**

(57) Die Erfindung betrifft einen Spreizdübel für die Verankerung in konisch nach innen erweiterten Bohrlöchern, bestehend aus einem Spreizkörper (1) mit kegelförmiger Spreizzone (2) und einer auf diesem auftreibbaren Spreizhülse (6), deren aufspreizbarer Teil aus durch Längsschlitze gebildeten Spreizlamellen (9) besteht. Zur Vermeidung eines Abgleitens der unter Belastung stehenden Spreizhülse (6) vom Spreizkörper (1), insbesondere beim Einfluß von Erschütterungen ist der Spreizkörper (1) mit einem in Dübellängsrichtung an die Spreizzone anschließenden und zur Längsachse hin verjüngenden Kegelstumpf (3) versehen. Ferner bestehen die Spreizlamellen (9) aus einem dicken (10) und einem sich unter Bildung eines innenliegenden Absatzes in Längsrichtung anschließenden dünnen Teil (11).

## Spreizdübel für die Verankerung in konisch nach innen erweiterten Bohrlöchern

Die Erfindung betrifft einen Spreizdübel für die Verankerung in konisch nach innen erweiterten Bohrlöchern, bestehend aus einem Spreizkörper mit kegelförmiger Spreizzone und einer auf diesem auftreibbaren Spreizhülse, deren aufspreizbarer Teil aus durch Längsschlitze gebildeten Spreizlamellen besteht.

Die Verankerung bekannter Spreizdübel wird in einem zylindrischen Loch dadurch herbeigeführt, daß die Spreizhülse durch das Auftreiben auf den Spreizkörper zwischen diesem und der Bohrlochwandung verspannt wird. Dadurch wird ein dementsprechender Druck auf das das Bohrloch umgebende Material ausgeübt. Es gibt aber Anwendungsfälle, bei denen solche für die Verankerung ansich notwendige Spannungen unerwünscht oder gar nachteilig sind. In diesen Fällen kann eine wirksame Verankerung nur durch Formschluß erzielt werden, in dem das Bohrloch im Bohrlochgrund konisch erweitert wird. Beim Auftreiben der Spreizhülse auf den Spreizkörper werden die Spreizlamellen in die konische Erweiterung ausgebogen, so daß sich eine formschlüssige Verankerung ergibt.

Diese Art der Verankerung hat sich zwar grundsätzlich bewährt. Es kann aber insbesondere beim Einfluß von Erschütterungen vorkommen, daß die Spreizhülse unter Belastung wieder vom Spreizkörper heruntergezogen wird. Der Erfindung liegt daher die Aufgabe zugrunde, einen Spreizdübel zur Verankerung in konisch nach innen erweiterten Bohrlöchern zu schaffen, bei dem diese Nachteile nicht auftreten. Erfindungsgemäß wird dies dadurch erreicht, daß der Spreizkörper mit einem in Dübellängsrichtung

an die Spreizzone anschließenden und sich zur Längsachse hin
verjüngenden Kegelstumpf. versehen ist und daß die Spreizlamellen aus einem dicken und einem sich unter Bildung eines
innenliegenden Absatzes in Längsrichtung anschließenden dünnen Teil bestehen.

Bei der Verankerung dieses erfindungsgemäßen Spreizdübels
werden die Lamellen zunächst in ihrem.dünneren und dann anschließend in ihrem dickeren Teil aufgeweitet. Sobald die
dünneren Lamellenteile am Bohrlochgrund anstoßen, werden diese bei fortgesetztem Auftreiben der Spreizhülse auf dem Spreizkörper zur Längsachse hin umgelenkt in den freien Raum zwischen
Kegelstumpf und Bohrlochgrund. Dadurch hintergreifen die Spreizlamellen den Spreizkörper teilweise, so daß eine wirksame Sicherung gegen Herausziehen der Spreizhülse aus dem Bohrloch gegeben
ist. Bei Einwirken einer Auszugslast wird der Spreizkörper von
den umgebogenen Lamellen beaufschlagt und unterliegt damit ebenfalls der Tendenz, ausgezogen zu werden. Dadurch wird aber der
Spreizkörper auf den dicken Teil der Lamellen gepreßt und diese wiederum an die Wandung der konischen Erweiterung, die durch
den Formschluß der Auszugslast einen entsprechenden Widerstand
entgegensetzt. Damit ist eine Selbstverstärkung der Verankerung
gegeben, so daß die Gefahr des Abziehens der Spreizhülse vom
Spreizkörper unter zu hoher Auszugslast entgegengewirkt ist.

In weiterer Ausgestaltung der Erfindung entspricht die Länge
des dicken Teils der Lamelle der Seitenlänge der Spreizzone und
die Länge des dünnen Teils der Seitenlänge des Kegelstumpfes.
Damit sind optimale Maßverhältnisse gegeben, bei der die maximal mögliche Aufspreizung der Dübelhülse erreicht ist, ohne daß
die dünneren Teile der Lamellen im Bohrlochgrund der Gefahr unterliegen, gestaucht zu werden.

Eine andere Ausgestaltung der Erfindung sieht vor, daß der Spreizkörper mit einem in die Spreizhülse hineinragenden zylindrischen Fortsatz versehen ist, an dessen Übergang zur Spreizzone eine Schulter angeordnet ist, deren Durchmesser geringfügig größer ist, als der des Absatzes der Spreizlamellen. Bei vormontiertem und noch nicht gespreiztem Dübel liegt bei dieser Ausgestaltung der Absatz der Lamellen an der Schulter an. Bei Einführen des Dübels in ein Bohrloch ist damit verhindert, daß schon eine Spreizung auftritt, bevor der Spreizkörper mit der Endfläche seines Kegelstumpfes am Bohrlochgrund anliegt. Dies ist besonders dann von Bedeutung, wenn das Bohrloch etwas enger ausgefallen ist und damit ein höherer Reibungswiderstand beim Einführen des Spreizdübels auftritt. Sobald aber der Spreizkörper am Bohrlochgrund anliegt, wird durch weiteres Eintreiben der Spreizhülse in das Bohrloch die Schulter überwunden und die Aufspreizung beginnt.

Bei einem Spreizdübel mit einer Spreizhülse, bei der zur Aufnahme einer Befestigungsschraube auf der den Spreizlamellen abgewandten Seite ein Innengewinde vorgesehen ist, kann nach einer anderen Ausgestaltung der Erfindung im aufgespreizten Zustand das innere Ende des Gewindes im Abstand vom Beginn des Spreizkörpers enden. Diese Ausgestaltung begrenzt die Einschraubmöglichkeit der Befestigungsschraube in den Spreizdübel. Dadurch ist sichergestellt, daß beim Eindrehen der Befestigungsschraube die Spreizhülse nicht vom Spreizkörper wieder herunter und aus dem Bohrloch herausgedrückt wird.

Schließlich kann zur Erleichterung der Aufspreizung die Spreizhülse im Bereich des Endes der Längsschlitze in ansich bekannter Weise mit einer außen umlaufenden Nut versehen sein.

0035095

In der Zeichnung ist ein Ausführungsbeispiel der Erfindung dargestellt. Es zeigt

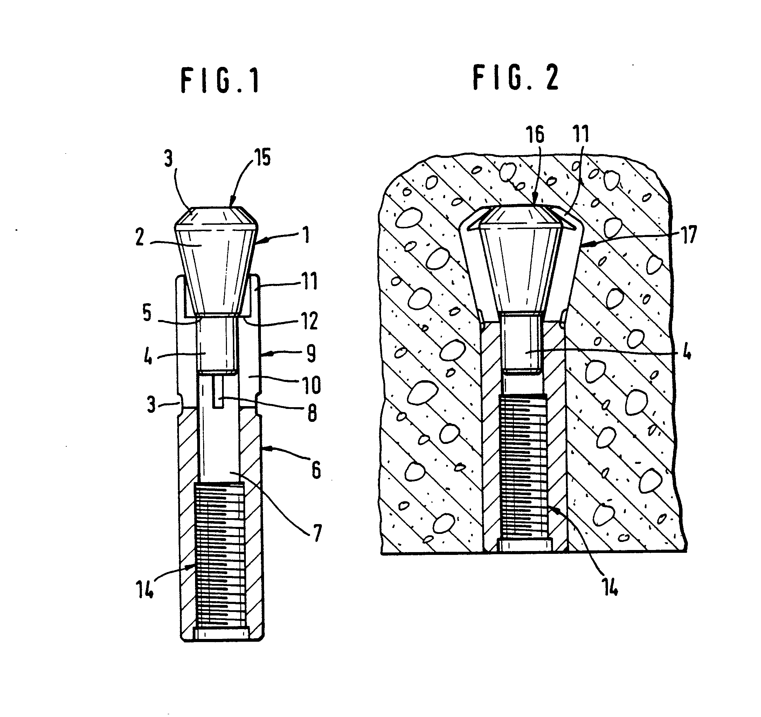

Figur 1    den Spreizdübel in vormontiertem, noch nicht aufgespreizten Zustand und

Figur 2    den in einem konisch nach innen erweiterten Bohrloch verankerten Spreizdübel.

Der Spreizdübel besteht aus dem Spreizkörper 1 mit kegelförmiger Spreizzone 2. An diese schließt sich ein zur Längsachse
hin verjüngender Kegelstumpf 3 an. Am entgegengesetzten Ende
besitzt der Spreizkörper 1 einen zylindrischen Fortsatz 4, an
dessen Übergang zur Spreizzone 2 eine Schulter 5 vorgesehen
ist. Die Spreizhülse 6 weist eine Längsbohrung 7 auf und ist
mit durch Längsschlitze 8 gebildeten Spreizlamellen 9 versehen. Diese weisen einen dicken Teil 10 und einen dünnen Teil 11
auf. Der Übergang vom dicken zum dünnen Teil ist durch einen
innenliegenden Absatz 12 gebildet, der an der Schulter 5 zu liegen kommt. Eine außenumlaufende Nut 13 ist im Bereich des Endes
des Längsschlitzes 8 angeordnet, so daß durch die damit gegebene Querschnittsverringerung ein leichteres Aufspreizen eintritt.
An dem dem Spreizkörper gegenüberliegenden Ende besitzt die Sprei
hülse 6 ein Innengewinde 14, das im aufgespreizten Zustand des
Dübels im Abstand vom zylindrischen Fortsatz 4 des Spreizkörper 1
endet. Im verankerten Zustand liegt die Stirnfläche 15 des Kegelstumpfes 3 am Bohrlochgrund 16 an, so daß dort die Reaktionskräfte des Auftreibens der Hülse auf den Spreizkörper aufgenommen
werden. Der dünnere Teil 11 der Lamellen 9 hat sich in den Freiraum zwischen Oberfläche des Kegelstumpfes und Bohrlochgrund umgebogen und hintergreift damit den Spreizkörper. Der dicke Teil
der Lamellen liegt an der Wandung der konischen Erweiterung 17
an und bildet so eine formschlüssige Verankerung.

artur fischer forschung
7244 Tumlingen/Waldachtal 3

den 27. Februar 1980

Zn/Woe

- 1 -

EP 1416

P a t e n t a n s p r ü c h e

1. Spreizdübel für die Verankerung in konisch nach innen
erweiterten Bohrlöchern, bestehend aus einem Spreizkörper mit kegelförmiger Spreizzone und einer auf diesem
auftreibbaren Spreizhülse, deren aufspreizbarer Teil
aus durch Längsschlitze gebildeten Spreizlamellen besteht, dadurch gekennzeichnet, daß der Spreizkörper mit
einem in Dübellängsrichtung an die Spreizzone anschliessenden und zur Längsachse hin verjüngenden Kegelstumpf
versehen ist, und daß die Spreizlamellen aus einem dikken und einem sich unter Bildung eines innenliegenden
Absatzes in Längsrichtung anschließenden dünnen Teil bestehen.

2. Spreizdübel nach Anspruch 1, dadurch gekennzeichnet, daß
die Länge des dicken Teils der Lamellen der Seitenlänge
der Spreizzone und die Länge des dünnen Teils der Seitenlänge des Kegelstumpfes entspricht.

3. Spreizdübel nach Anspruch 1, dadurch gekennzeichnet, daß der Spreizkörper mit einem in die Spreizhülse hineinragenden zylindrischen Fortsatz versehen ist, an dessen Übergang zur Spreizzone eine Schulter angeordnet ist, deren Durchmesser geringfügig größer ist, als der des Absatzes der Spreizlamellen.

4. Spreizdübel nach Anspruch 1 mit einer Spreizhülse, bei der zur Aufnahme einer Befestigungsschraube auf der den Spreizlamellen abgewandten Seite ein Innengewinde vorgesehen ist, dadurch gekennzeichnet, daß im aufgespreizten Zustand das innere Ende dieses Gewindes im Abstand vom Beginn des Spreizkörpers endet.

5. Spreizdübel nach Anspruch 1, dadurch gekennzeichnet, daß die Spreizhülse in ansich bekannter Weise im Bereich des Endes der Längsschlitze eine außen umlaufende Nut aufweist.

0035095

1 / 1

FIG.1    FIG. 2

**Europäisches Patentamt**

**EUROPÄISCHER RECHERCHENBERICHT**

0035095

Nummer der Anmeldung

EP 81 10 0148.6

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| X | FR - A - 1 010 775 (DEBRAY)  * Fig. 4, 8 * | 1 | F 16 B 13/08 |
| | DE -C - 857 141 (M. LANGENSIEPEN)  * Fig. 5, 6 * | 1,2,3 | |
| | DE - A - 1 911 632 (FISCHER)  * Fig. 2 * | 1 | |
| | DE - A1 - 2 916 737 (HOLMSTRÖM)  * Fig. 2 * | 1 | **RECHERCHIERTE SACHGEBIETE** (Int. Cl.³) |
| | US - A - 3 107 570 (ZIFFERER et al.)  * Fig. 5 * | 1 | F 16 B 13/04  F 16 B 13/08 |
| A | DE -A1 - 2 444 078 (BRÜCKL-TECHNIK) | | |
| A | DE - A - 2 001 197 (HUNOLD) | | |
| A | AT - B - 57 461 (WINQVIST et al.) | | |
| A | FR - A - 1 174 567 (BILL) | | **KATEGORIE DER GENANNTEN DOKUMENTE** |

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 21-05-1981 | ZAPP |

EPA form 1503.1  06.78